# EUROPEAN PATENT SPECIFICATION

(11) **EP 2 184 890 B1**
(45) Date of publication and mention of the grant of the patent: **05.06.2013**
(21) Application number: 09013752.2
(22) Date of filing: 02.11.2009
(51) Int. Cl.: H04L 12/12, H04L 12/40, H04L 12/24, H04L 25/03, H04L 12/413

(54) **Method and system for control of energy efficiency and associated policies in a physical layer device**
Verfahren und System zur Steuerung der Energieeffizienz und zugehörige Richtlinien in einer physischen Schichtvorrichtung
Procédé et système pour contrôler l'efficacité énergétique et politiques associées dans un dispositif de couche physique

(30) Priority: 05.11.2008 US 111653 P; 22.05.2009 US 470970
(43) Date of publication of application: 12.05.2010
(73) Proprietor: Broadcom Corporation, Irvine, CA 92617 (US)
(72) Inventor: Diab, Wael William, San Francisco, CA 94109 (US)
(74) Representative: Jehle, Volker Armin

(56) References cited:
- US-A1- 2005 054 389
- US-A1- 2008 225 841
- US-A1- 2008 225 879
- US-A1- 2008 225 881
- US-A1- 2008 225 894
- US-B1- 6 463 542

## Description

This patent application makes reference to, claims priority to and claims benefit from United States Provisional Patent Application Serial No. 61/111,653, filed on November 5, 2008.

This application also make reference to:
United States Patent Application serial No. _ (Attorney Docket No. 20368US02) filed on even date herewith; and
United States Patent Application serial No. _ (Attorney Docket No. 20755US02) filed on even date herewith.

Each of the above stated applications is hereby incorporated herein by reference in its entirety.

### FIELD OF THE INVENTION

Certain embodiments of the invention relate to networking. More specifically, certain embodiments of the invention relate to a method and system for control of energy efficiency and associated policies in a physical layer device.

### BACKGROUND OF THE INVENTION

Communications networks and in particular Ethernet networks, are becoming an increasingly popular means of exchanging data of various types and sizes for a variety of applications. In this regard, Ethernet networks are increasingly being utilized to carry voice, data, and multimedia traffic. Accordingly more and more devices are being equipped to interface to Ethernet networks. Broadband connectivity including internet, cable, phone and VOIP offered by service providers has led to increased traffic and more recently, migration to Ethernet networking. Much of the demand for Ethernet connectivity is driven by a shift to electronic lifestyles involving desktop computers, laptop computers, and various handheld devices such as smart phones and PDA's. As an increasing number of portable and/or handheld devices are enabled for Ethernet communications, battery life may be a concern when communicating over Ethernet networks. Accordingly, ways of reducing power consumption when communicating over electronic networks may be needed. Furthermore, ways of improving energy efficiency while maintaining compatibility with existing infrastructure and minimizing the redesign of network components are desirable.

Document US 2008/0225894 shows a method and a system according to the preamble of claims 1 and 10.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for control of energy efficiency and associated policies in a physical layer device, substantially as shown in and/or described in connection with at least one of the figures, as set forth more completely in the claims.

According to an aspect, a method for networking comprises:
controlling from within a PHY device, operation of said PHY device based on one or more control policies executed from within said PHY device, wherein said one or more control policies enable energy efficient networking by said PHY device, said energy efficient networking comprising management of power consumption associated with communication of data via said PHY device.

Advantageously, the method further comprises selecting a mode of operation for said PHY device based on said control policy.

Advantageously, the method further comprises reconfiguring one or more components of said PHY device based on said selected mode of operation.

Advantageously, the method further comprises allocating memory to, and/or de-allocating memory from, buffering received and/or to-be-transmitted data, based on said selected mode of operation.

Advantageously, the method further comprises allocating memory to, and/or de-allocating memory from, buffering received and/or to-be-transmitted data, based on an amount of time required for said reconfiguration.

Advantageously, the method further comprises allocating memory to, and/or de-allocating memory from, buffering received and/or to-be-transmitted data, based on an amount of time required for reconfiguration of a link partner communicatively coupled to said PHY device.

Advantageously, the method further comprises triggering said reconfiguration of said PHY device at a time determined by said control policy.

Advantageously, said selected mode of operation comprises one of an LPI mode of operation and a subset PHY mode of operation.

Advantageously, the method further comprises executing said one or more control policies from within said PHY device utilizing hardware, software, and/or firmware within said PHY device.

Advantageously, the method further comprises controlling, from within said PHY device, operation of other PHY devices integrated on a common substrate with said PHY device.

According to an aspect, a system for networking is provided, the system comprising:
one or more circuits for use in a PHY device, said one or more circuits being operable to execute one or more control policies that enable energy efficient networking by said PHY device, said energy efficient networking comprising management of power consumption associated with communication of data via said PHY device.

Advantageously, said one or more circuits are operable to select a mode of operation for said PHY device based on said control policy.

Advantageously, said one or more circuits are operable to reconfigure one or more components of said PHY device based on said selected mode of operation.

Advantageously, said one or more circuits comprise one or more memory elements, and said one or more circuits are operable to allocate said one or more memory elements to, and/or de-allocate said one or more memory elements from, buffering received and/or to-be-transmitted data, based on said selected mode of operation.

Advantageously, said one or more circuits comprise one or more memory elements, and said one or more circuits are operable to allocate said one or more memory elements to, and/or de-allocate said one or more memory elements from, buffering received and/or to-be-transmitted data, based on an amount of time required for said reconfiguration.

Advantageously, said one or more circuits comprise one or more memory elements, and said one or more circuits are operable to allocate said one or more memory elements to, and/or de-allocate said one or more memory elements from, buffering received and/or to-be-transmitted data, based on an amount of time required for reconfiguration of a link partner communicatively coupled to said PHY device.

Advantageously, said one or more circuits are operable to trigger said reconfiguration of said PHY device at a time determined by said control policy.

Advantageously, said selected mode of operation comprises one of an LPI mode of operation and a subset PHY mode of operation.

Advantageously, said one or more circuits are operable to execute said one or more control policies from within said PHY device utilizing hardware, software, and/or firmware within said PHY device.

Advantageously, said one or more circuits are operable to control one or more other PHY devices integrated on a common substrate with said PHY device.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary Ethernet connection between two network devices, in accordance with an embodiment of the invention.

FIG. 2 is a block diagram illustrating an exemplary Ethernet over twisted pair PHY device architecture comprising a multi-rate capable physical block, in accordance with an embodiment of the invention.

FIG. 3A is a block diagram illustrating an exemplary PHY device operable to implement a control policy for energy efficient networking, in accordance with an embodiment of the invention.

FIG. 3B is a diagram illustrating multiple PHY devices integrated on chip, wherein each PHY device is operable to implement an EEN control policy, in accordance with an embodiment of the invention.

FIG. 3C is a diagram illustrating multiple PHY devices integrated on chip managed and managed by a plurality of EEN control policies, in accordance with an embodiment of the invention.

FIG. 4 is a flow chart illustrating implementation of an EEN control policy in a PHY, in accordance with an embodiment of the invention.

### DETAILED DESCRIPTION OF THE INVENTION

Certain embodiments of the invention may be found in a method and system for control of energy efficiency and associated policies in a physical layer device. In various embodiments of the invention, operation of a PHY device may be controlled based on one or more energy efficient networking (EEN) control policies executed from within the PHY device. The one or more control policies may enable managing power consumption associated with communication of data via the PHY device. A mode of operation of the PHY device may be selected based on the control policy. One or more components of the PHY device may be reconfigured based on the selected mode of operation. A first portion of the reconfiguration may be performed prior to sending an EEN control signal and a remaining portion of the reconfiguration may be performed after sending the EEN control signal. Memory within the PHY may be allocated to buffering received and/or to-be-transmitted data based on the selected mode of operation, based on an amount of time required for the reconfiguration, and/or based on an amount of time required for reconfiguration of a link partner communicatively coupled to the PHY device. Conversely, memory within the PHY may be de-allocated from buffering received and/or to-be-transmitted data based on the selected mode of operation, based on an amount of time required for the reconfiguration, and/or based on an amount of time required for reconfiguration of a link partner communicatively coupled to the PHY device. De-allocating memory from buffering may free the memory up to support other functions such as encryption and/or decryption. The reconfiguration may be triggered at a time determined by the control policy. The selected mode of operation may comprise an LPI mode of operation or a subset PHY mode of operation. The control policy may be executed within the PHY device utilizing hardware, software, and/or firmware within the PHY device. Multiple PHY devices may be integrated on a common substrate, and one of the PHY devices may control operation and/or configuration of one or more of the other PHY devices.

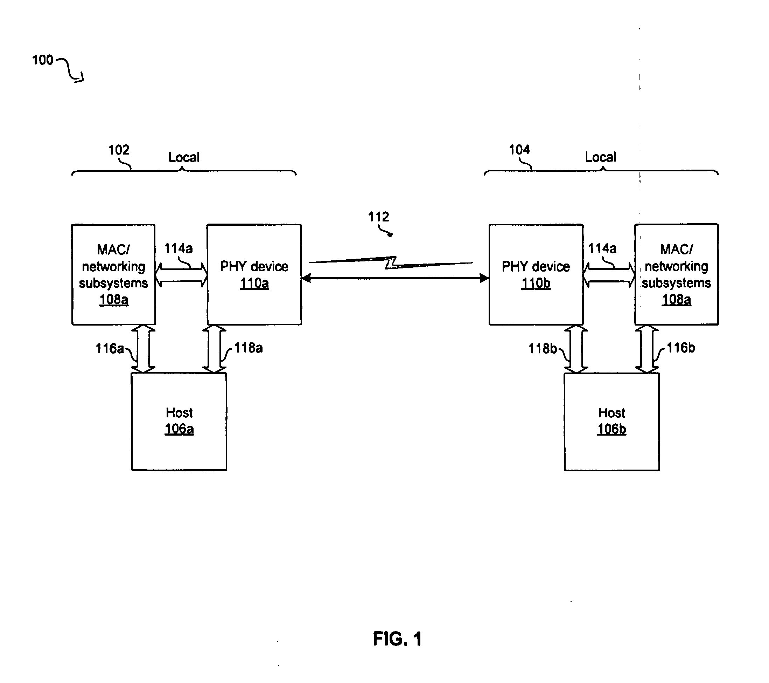

FIG. 1 is a block diagram illustrating an exemplary Ethernet connection between a two network devices, in accordance with an embodiment of the invention. Referring to FIG. 1, there is shown a system 100 that comprises a network device 102 and a network device 104. The network devices 102 and 104 may be link partners that communicate via the link 112 and may comprise, respectively, hosts 106a and 106b, networking subsystems 108a and 108b, PHY devices 110a and 110b, interfaces 114a and 114b, interfaces 116a and 116b, and interfaces 118a and 118b. The interfaces 114a and 114b are referenced collectively or separately herein as interface(s) 114, and the interfaces 116a and 116b are referenced collectively or separately herein as interface(s) 116. The hosts 106a and 106b are referenced collectively or separately herein as host(s) 106. The networking subsystems 108a and 108b are referenced collectively or separately herein as networking subsystem(s) 108. The PHY devices 110a and 110b are referenced collectively or separately herein as PHY device(s) 106.

The link 112 is not limited to any specific medium. Exemplary link 112 media may comprise copper, wireless, optical and/or backplane technologies. For example, a copper medium such as STP, Cat3, Cat 5, Cat 5e, Cat 6, Cat 7 and/or Cat 7a as well as ISO nomenclature variants may be utilized. Additionally, copper media technologies such as InfiniBand, Ribbon, and backplane may be utilized. With regard to optical media for the link 112, single mode fiber as well as multi-mode fiber may be utilized. With regard to wireless, the network devices 102 and 104 may support one or more of the 802.11 family of protocols. In an exemplary embodiment of the invention, the link 112 may comprise up to four or more physical channels, each of which may, for example, comprise an unshielded twisted pair (UTP). The network device 102 and the network device 104 may communicate via two or more physical channels comprising the link 112. For example, Ethernet over twisted pair standards 10BASE-T and 100BASE-TX may utilize two pairs of UTP while Ethernet over twisted pair standards 1000BASE-T and 10GBASE-T may utilize four pairs of UTP.

The network devices 102 and/or 104 may comprise, for example, switches, routers, end points, routers, computer systems, audio/video (A/V) enabled equipment, or a combination thereof. In this regard, AN equipment may, for example, comprise a microphone, an instrument, a sound board, a sound card, a video camera, a media player, a graphics card, or other audio and/or video device. Additionally, the network devices 102 and 104 may be enabled to utilize Audio/Video Bridging and/or Audio/video bridging extensions (collectively referred to herein as audio video bridging or AVB) for the exchange of multimedia content and associated control and/or auxiliary data. Also, the network devices may be operable to implement security protocols such IPsec and/or MACSec.

The hosts 106a and 106b may be operable to handle functionality of OSI layer 3 and above in the network devices 102 and 104, respectively. The hosts 106a and 106b may be operable to perform system control and management, and may comprise hardware, software, or a combination thereof. The hosts 106a and 106b may communicate with the networking subsystems 108a and 108b via interfaces 116a and 116b, respectively. The hosts 106a and 106b may additionally exchange signals with the PHY devices 110a and 110b via interfaces 118a and 118b, respectively. The interfaces 116a and 116b may correspond to PCI or PCI-X interfaces. The interfaces 118a and 118b may comprise one or more discrete signals and/or communication busses. Notwithstanding, the invention is not limited in this regard.

The networking subsystems 108a and 108b may comprise suitable logic, circuitry, and/or code that may be operable to handle functionality of OSI layer 2 and above layers in the network device 102 and 104, respectively. In this regard, networking subsystems 108 may each comprise a media access controller (MAC) and/or other networking subsystems. Each networking subsystem 108 may be operable to implement, switching, routing, and/or network interface card (NIC) functions. Each networking subsystems 108a and 108b may be operable to implement Ethernet protocols, such as those based on the IEEE 802.3 standard, for example. Notwithstanding, the invention is not limited in this regard. The networking subsystems 108a and 108b may communicate with the PHY devices 110a and 110b via interfaces 114a and 114b, respectively. The interfaces 114a and 114b may correspond to Ethernet interfaces that comprise protocol and/or link management control signals. The interfaces 114a and 114b may be, for example, multi-rate capable interfaces and/or media independent interfaces (MII).

The PHY devices 110 may each comprise suitable logic, circuitry, interfaces, and/or code that may enable communication between the network device 102 and the network device 104. Each of the PHY devices 110 may be referred to as a physical layer transmitter and/or receiver, a physical layer transceiver, a PHY transceiver, a PHYceiver, or simply a PHY. The PHY devices 110a and 110b may be operable to handle physical layer requirements, which include, but are not limited to, packetization, data transfer and serialization/deserialization (SERDES), in instances where such an operation is required. Data packets received by the PHY devices 110a and 110b from networking subsystems 108a and 108b, respectively, may include data and header information for each of the above six functional OSI layers. The PHY devices 110a and 110b may be configured to convert packets from the networking subsystems 108a and 108b into physical layer signals for transmission over the physical link 112. In some embodiments of the invention, the PHY devices 110 may comprise suitable logic, circuitry, and/or code operable to implement MACSec.

The PHY devices 110 may each support, for example, Ethernet over copper, Ethernet over fiber, and/or backplane Ethernet operations. The PHY devices 110 may each enable multi-rate communications, such as 10 Mbps, 100 Mbps, 1000 Mbps (or 1 Gbps), 2.5Gbps, 4Gbps, 10 Gbps, or 40Gbps, for example. In this regard, each of the PHY devices 110 may support standard-based data rate limits and/or non-standard data rate limits. Moreover, the PHY devices 110 may each support standard Ethernet link lengths or ranges of operation and/or extended ranges of operation. Each of the PHY devices 110 may enable communication between the network device 102 and the network device 104 by utilizing a link discovery signaling (LDS) operation that enables detection of active operations in the other network device. In this regard the LDS operation may be configured for supporting a standard Ethernet operation and/or an extended range Ethernet operation. Each of the PHY devices 110 may also support autonegotiation for identifying and selecting communication parameters such as speed and duplex mode.

One or both of the PHY devices 110a and 110b may comprise a twisted pair PHY capable of operating at one or more standard rates such as 10Mbps, 100Mbps, 1Gbps, and 10Gbps (10BASE-T, 100GBASE-TX, 1GBASE-T, and/or 10GBASE-T); potentially standardized rates such as 40Gbps and 100Gbps; and/or non-standard rates such as 2.5Gbps and 5Gbps.

One or both of the PHY devices 110a and 110b may comprise a backplane PHY capable of operating at one or more standard rates such as 10Gbps (10GBASE-KX4 and/or 10GBASE-KR); and/or non-standard rates such as 2.5Gbps and 5Gbps.

One or both of the PHY devices 110a and 110b may comprise an optical PHY capable of operating at one or more standard rates such as 10Mbps, 100Mbps, 1 Gbps, and 10Gbps; potentially standardized rates such as 40Gbps and 100Gbps; and/or non-standardized rates such as 2.5Gbps and 5Gbps. In this regard, the optical PHY may be a passive optical network (PON) PHY.

One or both of the PHY devices 110a and 110b may support multi-lane topologies such as 40Gbps CR4, ER4, KR4; 100Gbps CR10, SR10 and/or 10Gbps LX4 and CX4. Also, serial electrical and copper single channel technologies such as KX, KR, SR, LR, LRM, SX, LX, CX, BX10, LX10 may be supported. Non standard speeds and non-standard technologies, for example, single channel, two channel or four channels may also be supported. More over, TDM technologies such as PON at various speeds may be supported by the network devices 102 and/or 104.

One or both of the PHY devices 110a and 110b may support transmission and/or reception at a high(er) data in one direction and transmission and/or reception at a low(er) data rate in the other direction. For example, the network device 102 may comprise a multimedia server and the network device 104 may comprise a multimedia client. In this regard, the network device 102 may transmit multimedia data, for example, to the network device 104 at high(er) data rates while the network device 104 may transmit control or auxiliary data associated with the multimedia content at low(er) data rates.

In various embodiments of the invention, each of the PHY devices 110a and 110b may be operable to implement one or more energy efficient techniques, which may be referred to as energy efficient networking (EEN) on in the specific case of Ethernet, energy efficient Ethernet (EEE). For example, the PHY devices 110a and 110b may be operable to support low power idle (LPI) and/or sub-rating, also referred to as subset PHY, techniques. LPI may generally refer a family of techniques where, instead of transmitting conventional IDLE symbols during periods of inactivity, the PHY devices 110a and 110b may remain silent and/or communicate signals other than conventional IDLE symbols. Sub-rating, or sub-set PHY, may generally refer to a family of techniques where the PHYs are reconfigurable, in real-time or near real-time, to communicate at different data rates.

In operation, the PHY devices 110a and 110b may be operable to support one or more EEN techniques, comprising for example, LPI, and sub-rate or subset PHY. Accordingly, an EEN control policy may be implemented in firmware, hardware, and/or software within the PHY devices 110a and 110b. An EEN control policy may implement functions defined by, related to, or in place of protocols defined by IEEE 802.3az. The EEN control policy may determine how and/or when to configure and/or reconfigure the PHY devices 110a and 110b to optimize the tradeoff between energy efficiency and performance. For LPI, the control policy may be utilized to determine, for example, what variant of LPI to utilize, when to go into a LPI mode and when to come out of a LPI mode. For subset PHY, the PHY devices 110a and 110b may be operable to determine, for example, how to achieve a desired data rate and when to transition between data rates. Although aspects of the invention are described with regard to LPI and subset PHY, the invention is not so limited and other EEN techniques may be implemented via a PHY based control policy.

The EEN control policy may be implemented at the physical layer and may be transparent to OSI Layer 2 and the OSI layers above. In this regard, in some embodiments of the invention, a control policy for implementing EEN protocols, such as protocols defined by IEEE 802.3az, may be implemented entirely in the physical layer. In other embodiments of the invention, the control may be partially implemented in the physical layer and partially implemented in OSI layer 2 and higher OSI layers. A PHY device that implements such an EEN control policy may thus be a drop-in replacement for a conventional PHY device. The EEN control policy implemented by the PHY device, may be compatible with a legacy MAC and/or legacy host. In this manner, implementing an EEN control policy in a PHY device 110 may enable reaping the benefits of a more energy efficient network while avoiding the need to redesign or "re-spin" all, or a portion of, a networking subsystem 108 and/or a host 106. Additionally, by implementing the EEN control policy at the physical layer hardware and/or software resources on a host 106 and/or networking system 108, that would otherwise be required for implementing the EEN policy, may be allocated for other functions.

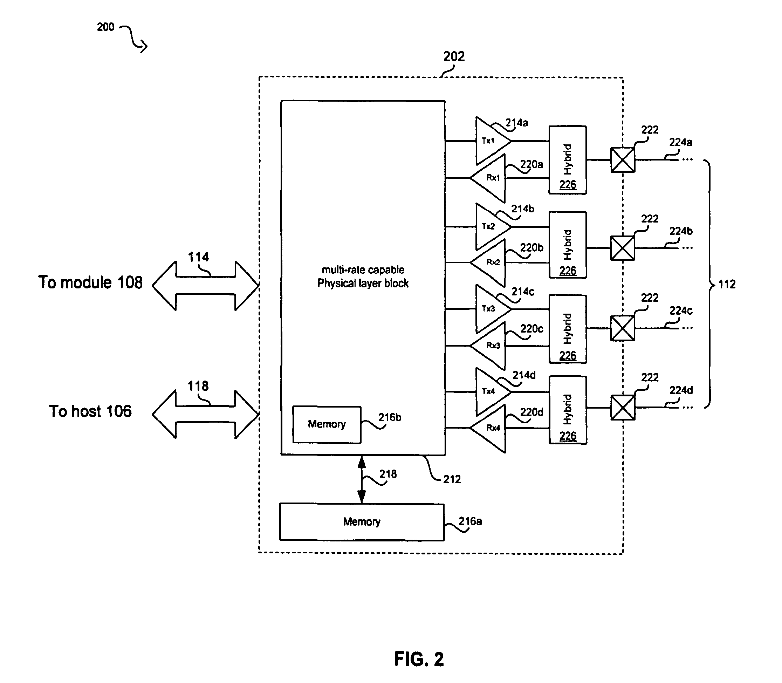

FIG. 2 is a block diagram illustrating an exemplary Ethernet over twisted pair PHY device architecture comprising a multi-rate capable physical block, in accordance with an embodiment of the invention. Referring to FIG. 2, there is shown a network device 200 which may comprises an Ethernet over twisted pair PHY device 202 and the interface 114. The PHY device 202 may be an integrated device which may comprise a multi-rate capable physical layer module 212, one or more transmitters 214, one or more receivers 220, a memory 216, and one or more input/output interfaces 222.

The PHY device 202 may be an integrated device that comprises a multi-rate capable physical layer module 212, one or more transmitters 214, one or more receivers 220, a memory 216, a memory interface 218, and one or more input/output interfaces 222. The PHY device 202 may be the same as or substantially similar to the PHY devices 110a and 110b described with respect to FIG. 1. In this regard, the PHY device 202 may provide layer 1 (physical layer) operability and/or functionality that enables communication with a remote PHY device.

The interface 114 may be the same as or substantially similar to the interfaces 114a and 114b described with respect to FIG. 1. The interface 114 may comprise, for example, a media independent interface such as XGMII, GMII, or RGMII for communicating data to and from the PHY 202. In this regard, the interface 114 may comprise a signal to indicate that data from the network subsystem 108 to the PHY 110 is imminent on the interface 114. Such a signal is referred to herein as a transmit enable (TX_EN) signal. Similarly, the interface 114 may comprise a signal to indicate that data from the PHY 110 to the network subsystem 108 is imminent on the interface 114. Such a signal is referred to herein as a receive data valid (RX_DV) signal. The interface 114 may also comprise a control interface such as a management data input/output (MDIO) interface.

The multi-rate capable physical layer module 212 in the PHY device 202 may comprise suitable logic, circuitry, and/or code that may enable operability and/or functionality of physical layer requirements. In this regard, the multi-rate capable physical layer module 212 may enable generating the appropriate link discovery signaling utilized for establishing communication with a remote PHY device in a remote network device. The multi-rate capable physical layer module 212 may communicate with a MAC controller, and/or other OSI layer 2 and higher subsystems, via the interface 114. In one aspect of the invention, the interface 114 may be a media independent interface (MII) and may be configured to utilize a plurality of serial data lanes for receiving data from the multi-rate capable physical layer module 212 and/or for transmitting data to the multi-rate capable physical layer module 212. The multi-rate capable physical layer module 212 may be configured to operate in one or more of a plurality of communication modes, where each communication mode may implement a different communication protocol. These communication modes may include, but are not limited to, Ethernet over twisted pair standards 10BASE-T, 100BASE-TX, 1000BASE-T, 10GBASE-T, and other similar protocols that utilize multiple physical channels between network devices. The multi-rate capable physical layer module 212 may be configured to operate in a particular mode of operation upon initialization or during operation. In this regard, the PHY device 202 may operate in a normal mode or in one of a plurality of an energy saving modes. Exemplary energy saving modes may comprise a low power idle (LPI) mode and one or more sub-rate modes where the PHY device 202 may communicate at less than a maximum supported or initially negotiated data rate.

In various embodiments of the invention, the multi-rate capable physical layer module 212 may comprise suitable logic, circuitry, interfaces, and/or code for implementing an energy efficient networking (EEN) control policy. Accordingly, the multi-rate capable physical layer module 212 may be operable to monitor one or more conditions and/or signals in the PHY device 202 and control mode of operation based on the monitoring. In this regard, the multi-rate capable physical layer module 212 may generate one or more control signals to configure and reconfigure the various components of the PHY device 202.

The multi-rate capable physical layer module 212 may comprise memory 216a and/or may be coupled to memory 216b through a memory interface 218. The memories 216a and 216b, referred collectively herein as memory 216, may comprise suitable logic, circuitry, and/or code that may enable storage or programming of information that includes parameters and/or code that may effectuate the operation of the multi-rate capable physical layer module 212. In this regard, the memory 216 may, for example, comprise one or more registers which may be accessed and/or controlled via a MDIO portion of the interface 114. Additionally, the memory 216 may buffer data received via the interface 114 prior to converting the data to physical symbols and transmitting it via one or more of the interfaces 222. For example, data from the interface 114 may be buffered while the PHY transitions from an energy saving mode to a higher performance mode - transitioning out of LPI mode or from a sub-rate to a higher data rate, for example. Also, the memory 216 may buffer data received via one or more of the interfaces 222 prior to packetizing or otherwise processing it and conveying it via the interface 114. For example, data received via the link 112 may be buffered in the memory 216 while higher layer functions and/or circuitry, such as a MAC or PCI bus, come out of an energy saving mode.

Each of the transmitters 214a, 214b, 214c, 214d, collectively referred to herein as transmitters 214, may comprise suitable logic, circuitry, interfaces, and/or code that may enable transmission of data from the network device 200 to a remote network device via, for example, the link 112 in FIG. 1. The receivers 220a, 220b, 220c, 220d may comprise suitable logic, circuitry, and/or code that may enable receiving data from a remote network device. Each of the transmitters 214a, 214b, 214c, 214d and receivers 220a, 220b, 220c, 220d in the PHY device 202 may correspond to a physical channel that may comprise the link 112. In this manner, a transmitter/receiver pair may interface with each of the physical channels 224a, 224b, 224c, 224d. In this regard, the transmitter/receiver pairs may be enabled to support various communication rates, modulation schemes, and signal levels for each physical channel. In this manner, the transmitters 214 and/or receivers 229 may support various modes of operation that enable managing energy consumption of the PHY device 202 and energy consumption on the link 112. Accordingly, one or more of the transmitters 214 and/or receivers 220 may be powered down and/or otherwise configured based on a mode of operation of the PHY device 202.

The input/output interfaces 222 may comprise suitable logic, circuitry, and/or code that may enable the PHY device 202 to impress signal information onto a physical channel, for example a twisted pair of the link 112 disclosed in FIG. 1. Consequently, the input/output interfaces 222 may, for example, provide conversion between differential and single-ended, balanced and unbalanced, signaling methods. In this regard, the conversion may depend on the signaling method utilized by the transmitter 214, the receiver 220, and the type of medium of the physical channel. Accordingly, the input/output interfaces 222 may comprise one or more baluns and/or transformers and may, for example, enable transmission over a twisted pair. Additionally, the input/output interfaces 222 may be internal or external to the PHY device 202. In this regard, if the PHY device 202 comprises an integrated circuit, then "internal" may, for example, refer to being "on-chip" and/or sharing the same substrate. Similarly, if the PHY device 202 comprises one or more discrete components, then "internal" may, for example, refer to being on the same printed circuit board or being within a common physical package.

Each hybrid 226 may comprise suitable logic, circuitry, interfaces, and/or code that may enable separating transmitted and received signals from a physical link. For example, the hybrids may comprise echo cancellers, far-end crosstalk (FEXT) cancellers, and/or near-end crosstalk (NEXT) cancellers. Each hybrid 226 in the network device 300 may be communicatively coupled to an input/output interface 222. One of more of the hybrids 226 may be enabled to support various modes of operation that enable managing energy consumption of the PHY device 202 and energy consumption on the link 112. Accordingly, portions of the hybrids 226 may be powered down and/or otherwise configured based on a mode of operation of the PHY device 202.

In operation, the network device 200 may communicate with a remote partner via the link 112. To optimize the tradeoff between performance and energy consumption, the PHY device 202 may implement a control policy, which may be utilized to determine when to transition between various modes of operation. In this regard, performance may be measured by a variety of metrics such as jitter, latency, bandwidth, and error rates.

In one exemplary embodiment of the invention, the control policy may determine when and how to utilize sub-rating to improve energy efficiency. Accordingly, the control policy may be utilized to determine what data rate to utilize, how to configure the various components of the PHY device 202 to realize a selected data rate, and when to transition between data rates. In this regard, the PHY device 202 may be operable to generate one or more control signals, based on the control policy, to configure or reconfigure the transmitters 214, receivers 220, hybrids 226, the memory 216, and/or one or more portions of the multi-rate capable PHY module 212. The PHY device 202 may also be operable to, based on the control policy, generate signals for communicating EEN states and/or decisions to a link partner.

In another exemplary embodiment of the invention, the control policy may make determinations as to when and how to utilize low power idle (LPI) to improve energy efficiency. Accordingly, the control policy may be utilized to determine when to go into an LPI mode, how to configure the various components of the PHY device 202 when in LPI mode, and when to come out of a LPI mode. The PHY device 202 may also be operable to, based on the control policy, generate signals for communicating EEN states and/or decisions to a link partner.

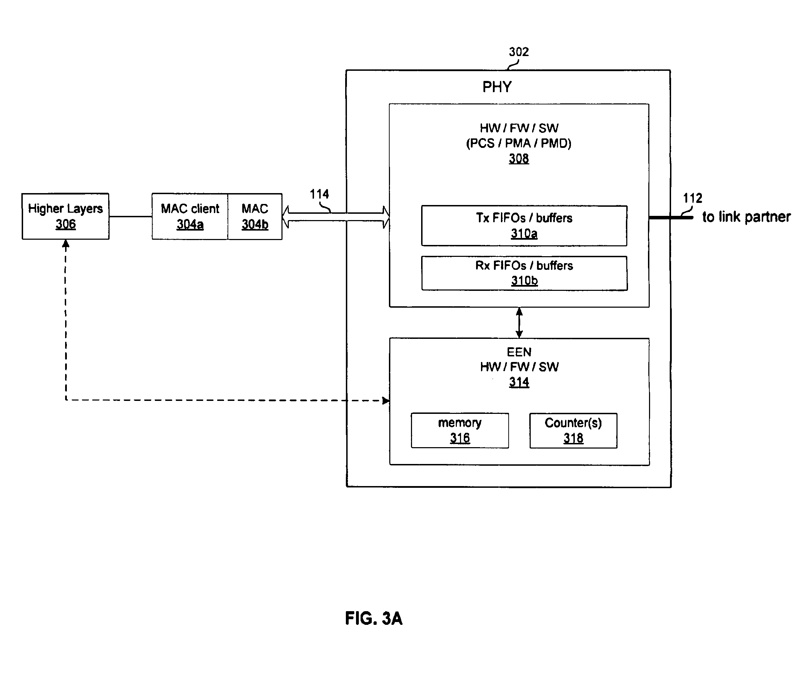

FIG. 3A is a block diagram illustrating an exemplary PHY operable to implement a control policy for energy efficient networking, in accordance with an embodiment of the invention. Referring to FIG. 3A, there is shown OSI layers above the MAC represented generically as block 306, a MAC client 304a, a MAC 304b and a PHY device 302. The PHY device 302 may comprise a module 308 for implementing the physical coding sublayer (PCS), the physical media attachment (PMA) sublayer and/or the physical media dependent (PMD) sublayer; and an EEN module 314. The module 308 may comprise one or more transmit buffers 310a, one or more receive buffers 310b.

The block 308 may be substantially similar to the hosts 106 described with respect to FIG. 1. The combination of the MAC client 304a and the MAC 304b may perform functions substantially similar to a network subsystem 108 described with respect to FIG. 1. The MAC client 304a may, for example, implement multiplexing and flow control to enable multiple network layer protocols to coexist and utilize the MAC 304b and the PHY 302. The MAC client 304a may be, for example, the logical link control (LLC) sub-layer defined in IEEE 802.2. The MAC 304b may perform data encapsulation and/or media access management, where media access management may comprise operations that handle conflicts arising from multiple network devices sharing a common physical medium. An exemplary operation may comprise arbitration and negotiation.

The PHY device 302 may comprise suitable logic, circuitry, interfaces and/or code that may be operable to implement physical layer functionality. In this regard, the physical coding sublayer (PCS), physical medium attachment (PMA) sublayer, and physical medium dependent (PMD) sublayer may be implemented via hardware, firmware, and/or software represented as module 308. The module 308 may be operable to perform one or more of physical encoding and/or decoding, PMA framing, and transmitter and/or receiver operations. The module 308 may comprise one or more transmit buffers 310a that may be operable to store data received via the interface 114 and destined for transmission on the link 112. The module 308 may comprise one or more receive buffers 310b that may be operable to store data received via the link 112 and destined for the MAC 304b.

The PHY device 302 may also comprise an EEN module 314 which may, in turn, comprise suitable logic, circuitry, and/or code that may be operable to implement an EEN control policy. The (EEN) control policy may be operable to balance the tradeoff between performance and power consumption in the PHY 302 and/or on the link 112. In various exemplary embodiments of the invention, the PHY device 302 may comprise memory 316 and/or one or more counters 318. In addition, the module 314 may be operable to generate EEN control information to be communicated to a link partner and/or process EEN control information received from a link partner.

The memory 316 may comprise one or more state registers and/or configuration registers for implementing the EEN control policy. The state registers may be read and/or written via, for example, a MDIO bus to the MAC 304a and/or one or more signals from the higher OSI layers 306. Additionally, the memory 316 may be allocated, de-allocated, and reallocated to supplement the Tx buffer 310a and/or the Rx buffer 310b.

In operation, the EEN control policy may make decisions such as when to enter and/or exit a low(er) power mode. EEN control policy decisions and the resulting actions, such as reconfiguring the PHY 302, may be determined based on one or more signals and/or conditions monitored in the PHY 302. Several examples of factors which may be considered by the control policy follow. Many of the examples are simplified and various embodiments of the invention may utilize a combination of two or more of them. Nevertheless, the invention is not limited to the examples provided.

Implementation of the EEN protocols and/or techniques may be based, for example, on an amount of data buffered in the buffers 310 and/or the memory 316. For example, in instances that the Tx buffer 310a is empty, or is empty for a certain amount of time, portions of the PHY 302 associated with data transmission may be reconfigured into a low(er) power state. Similarly, in instances that the Rx buffer 310b is empty, or is empty for a certain amount of time, portions of the PHY 302 associated with data reception may be reconfigured into a low(er) power state. In some embodiments of the invention, configuration of transmit portions of the PHY 302 may be determined based on a configuration of receive portions of the PHY 302, and visa versa - configuration of receive portions of the PHY 302 may be determined based on a configuration of receive portions of the PHY 302. Strapping configuration of the transmit portion to configuration of the receive portion in this manner may be based on the assumption that no traffic received from a link partner may correlate to no traffic being sent to the link partner. Such an assumption may be useful, for example, in core devices such as switches or routers that have limited ability to predict traffic on the link.

Implementation of the EEN protocols and/or techniques, such as determining when to transition between modes of operation, may be based, for example, on one or more counters and/or registers in the block 314. For example, in instances that the TX_EN of the interface 114 has not been asserted for a statically or dynamically determined period of time, portions of the PHY 302 associated with data transmission may be reconfigured into a low(er) power state. Similarly, in instances that data has not been received via the link 112, and/or that the link has been in IDLE, for a statically or dynamically determined period of time, portions of the PHY 302 associated with data reception may be reconfigured into a low(er) power state. Additionally, values of the counter may be stored and historical values of the counter may be utilized to predict when the PHY 302 may transition to a low(er) power mode without having a significant negative impact on performance.

Implementation of the EEN protocols and/or techniques, such as determining when to transition between modes of operation, may be based, for example, on management signals of an MDIO bus to the MAC 304b. For example, the MDIO may configure thresholds such as how long the PHY 302 should stay in a low(er) power mode after entering the low(er) power mode, how long a buffer should be empty before going into a low(er) power mode, and how full a buffer should be before waking up from a low(er) power mode. The MDIO may also be utilized to configure parameters pertaining to a link partner. Exemplary parameters comprise how long the link partner takes to wake up and how much buffering is available in the link partner's buffers. The MDIO may enable configuration of the control policy by a system designer or administrator.

Implementation of the EEN protocols and/or techniques, such as determining when to transition between modes of operation, may be based, for example, on signals from the block 306, such as signals generated by a PCI bus controller and/or a CPU. For example, a signal indicating whether the PCI bus is active may be utilized to predict whether data will be arriving at the PHY 302 and/or to determine whether the higher OSI layers 306 are ready to receive data from the PHY 302. For another example, signals from a CPU, or other data processing components in the block 306, may indicate a type of traffic communicated to the PHY 302 and the control policy may determine an appropriate mode of operation of the PHY 302 and/or an appropriate allocation of buffering, or other resources, in the PHY 302 based on the data type. In this regard, Implementation of the EEN protocols and/or techniques, such as determining when to transition between modes of operation, may be based, for example, on latency constraints of the traffic to be transmitted via the link 112 or communicated up to the MAC 304a. In instances when latency is not a problem, a series of traffic bursts may be buffered for an acceptable amount of time before waking the PHY device 302, the MAC 304, and/or higher layer functions for delivery of the accumulated traffic bursts.

Implementation of the EEN protocols and/or techniques, such as determining when to transition between modes of operation, may be based, for example, on signals received from a link partner to which the PHY 302 is communicatively coupled. In this regard, going into and coming out of low(er) power modes may require agreement by the link partner, or at least awareness of what the link partner is doing. For example, in instances that the link partner takes longer to wake up then the PHY 302, the PHY 302 may need to plan accordingly and allocate sufficient memory to the Tx buffer 310a. Conversely, in instances that the link partner wakes up faster than the PHY 302, the PHY 302 may need to plan accordingly and allocate sufficient memory to the Rx buffer 310b and/or instruct the link partner to increase its Tx buffer to hold off transmissions. A similar situation may occur when a link partner has less buffering available than the PHY 302. Accordingly, in some embodiments of the invention, the control policy may be utilized to dynamically allocate and reallocate as the memory 316, for example, to supplement the Tx buffer 310 or the Rx buffer 310b.

Implementation of the EEN protocols and/or techniques, such as determining when to transition between modes of operation, may be based, for example, on a type, format, and/or content of packet(s) and/or traffic received from a link partner to which the PHY 302 is communicatively coupled. In this regard, certain distinct packets and/or packet types may trigger the PHY 302 to transition to an energy saving mode and certain distinct packets and/or packet types may trigger the PHY 302 to transition out of an energy saving mode. Also, the PHY 302 may determine how long it may buffer ingress and/or egress traffic based on a type, format, and/or content of packet(s) and/or traffic received.

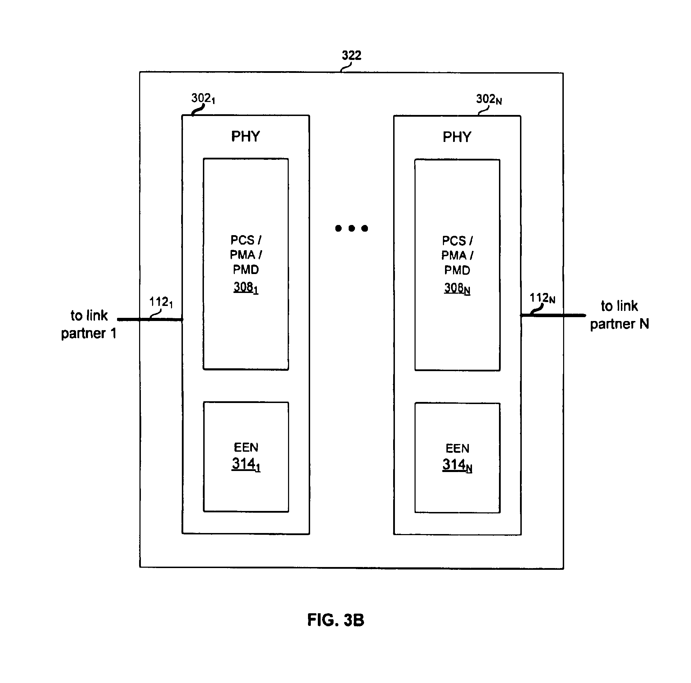

FIG. 3B is a diagram illustrating multiple PHY devices integrated on chip, wherein each PHY device is operable to implement an EEN control policy, in accordance with an embodiment of the invention. Referring to FIG. 3B, there is shown a substrate 322 on which a plurality of PHY devices 302₁, ..., 302_{N} are fabricated, where N is an integer. Each of the PHYs 302₁, ..., 302_{N} may comprise a module 308 which may be as described with respect to FIG. 3A. Each of the PHYs 302₁, ..., 302_{N} may comprise an EEN module 314 which may be as described with respect to, for example, FIG. 3A.

In operation, each module 314ₓ, where X is an integer between 1 and N, may manage power consumption and performance of PHY 302ₓ independently of the other N-1 PHYs. For example, some of the PHYs 302₁, ..., 302_{N} may utilize LPI techniques while other may utilize sub-rating. Furthermore, a PHY 302ₓ may go into and come out of LPI mode at different times and/or based on different factors than one or more of the other N-1 PHYs. Similarly, a PHY 302ₓ utilizing sub-rating may operate at a data rate determined independently of the data rate utilized by one or more of the other N-1 PHYs.

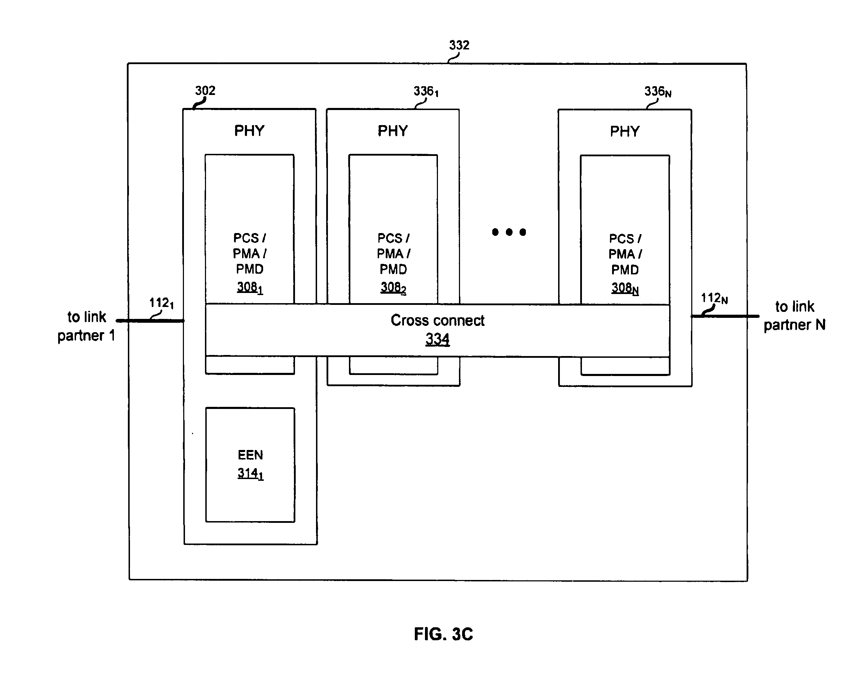

FIG. 3C is a diagram illustrating multiple PHY devices integrated on chip and managed by a plurality of EEN control policies, in accordance with an embodiment of the invention. Referring to FIG. 3C, there is shown a substrate 332 on which a PHY device 302 and one or more PHY devices 336₁, ..., 336_{N} are fabricated, where N is an integer. The PHYs 302 and 336₁, ..., 336_{N} may be communicatively coupled via a cross connect 334. Each of the 302 and 336₁, ..., 336_{N} may comprise a module 308 which may be as described with respect to FIG. 3A. The PHY 302 may also comprise a module 314 which may be as described with respect to FIG. 3A. Although the substrate 332 comprises only a single PHY 302, the invention is not so limited. In this regard, the substrate 332 may comprise a plurality of PHYs 302, each of which may be operable to manage power consumption of a subset of the PHYs 336₁, ..., 336_{N}.

In operation, the module 314₁ may mange power consumption and performance of the PHYs 302 and 336₁, ..., 336_{N}. In this regard, signals for implementing an EEN control policy may be communicated between the PHY 302 and the PHYs 336₁, ..., 336_{N} via the cross connect 334. Utilizing a common control policy for multiple PHYs may enable, for example, load balancing to achieve greater energy efficiency. In various embodiments of the invention, the PHYs may each utilize a common EEN technique, such as LPI. In other embodiments of the invention, the module 314₁ may generate one set of control signals that are communicatively coupled to each of the PHYs 336₁, ..., 336_{N}. In this regard, a manner in which each of the PHYs may be reconfigured based on the set of common signals may differ from one PHY to the next.

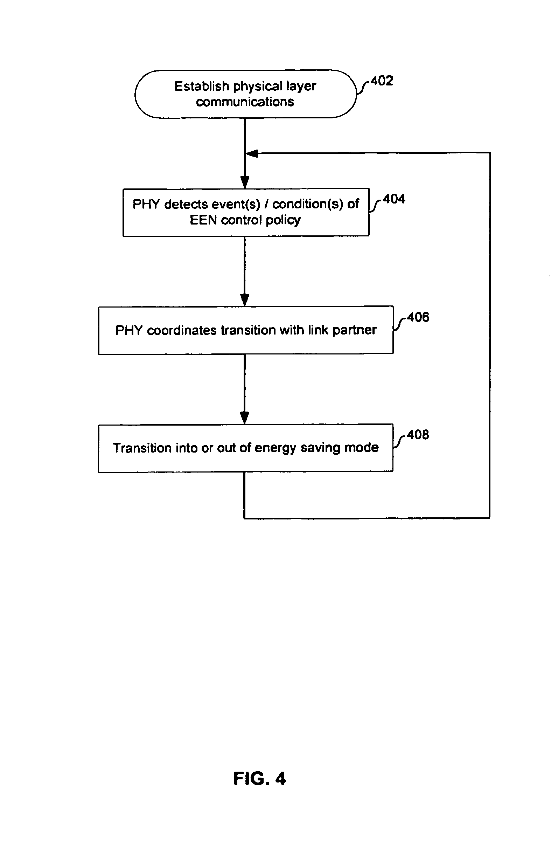

FIG. 4 is a flow chart illustrating implementation of an EEN control policy in a PHY, in accordance with an embodiment of the invention. Referring to FIG. 4, the exemplary steps may begin with step 402 when physical layer communications may be established between a PHY in a first link partner and a PHY in a second link partner. Subsequent to step 402, the exemplary steps may advance to step 404.

In step 404, logic, circuitry, interfaces, and/or code within the first PHY, such as the EEN module 314 described with respect to FIGS. 3A-3C, of a first link partner may detect an event and/or condition that, based on an EEN control policy, may trigger a transition into or out of a energy saving mode of operation. Subsequent to step 404, the exemplary steps may advance to step 406.

In step 406, the first PHY device may exchange signals and/or packets with the second PHY to coordinate the transition. In this regard, the PHYs may exchange packets and/or physical layer signals. The coordination may comprise, for example, an indication and/or negotiation of when the transition is to happen. Subsequent to step 406, the exemplary steps may advance to step 408.

In step 408, the PHY devices may implement the transition into or out of the energy saving mode of operation. In this regard, one or more portions of the PHY devices may be reconfigured via one or more control signals generated by an EEN module 314 based on an EEN control policy. Subsequent to step 408, the exemplary steps may return to step 404.

Various aspects of a method and system for physical layer control of energy efficient network devices and protocols are provided. In an exemplary embodiment of the invention, operation of a PHY device 202 may be controlled based on one or more energy efficient networking (EEN) control policies executed from within the PHY device 202 (FIG. 2). The one or more control policies may enable management of power consumption associated with communication of data via the PHY device 202. A mode of operation of the PHY device may be selected based on the control policy. One or more components, such as hybrids 226, transmitters 214, receivers 220, and memory 216a and 216b, of the PHY device 202 may be reconfigured based on the selected mode of operation. The memory 216 within the PHY 202 may be allocated to buffering received and/or to-be-transmitted data based on the selected mode of operation, based on an amount of time required for the reconfiguration, and/or based on an amount of time required for reconfiguration of a link partner communicatively coupled to the PHY device. Conversely, the memory 216 within the PHY 202 may be de-allocated from buffering received and/or to-be-transmitted data, based on the selected mode of operation, on an amount of time required for the reconfiguration, and/or on an amount of time required for reconfiguration of a link partner communicatively coupled to the PHY device. De-allocating memory from buffering may free the memory up to support other functions such as encryption and/or decryption. The reconfiguration may be triggered at a time determined by the control policy. The selected mode of operation may comprise an LPI mode of operation or a subset PHY mode of operation. The control policy may be executed within the PHY device utilizing hardware, software, and/or firmware within the PHY device. Multiple PHY devices 302 and 336 may be integrated on a common substrate 332, and one of the PHY devices 302 may control operation and/or configuration of one or more of the other PHY devices 336.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for control of energy efficiency and associated policies in a physical layer device.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for networking, the method comprising:
controlling from within a PHY device (110, 202, 302, 336), operation of said PHY device (110, 202, 302, 336) based on one or more control policies executed from within said PHY device (110, 202, 302, 336), wherein said one or more control policies enable energy efficient networking by said PHY device (110, 202, 302, 336), said energy efficient networking comprising management of power consumption associated with communication of data via said PHY device (110, 202, 302, 336);
wherein the method is **characterised in that** it further comprises:
buffering first data received from an Ethernet network link (112) while higher layer functions and/or circuitry come out of an energy saving mode, said higher layer functions and/or circuitry representing a MAC controller and/or other OSI layer 2 and higher subsystems,
selecting a mode of operation for said PHY device (110, 202, 302, 336) based on said control policy; and
reconfiguring one or more components of said PHY device (110, 202, 302, 336) based on said selected mode of operation.

2. The method according to claim 1, wherein the method further comprises: buffering second data received via an interface (114) from said higher layer functions and/or circuitry in a memory (216):
- while said PHY device (110, 202, 302, 336) transitions out of a low power idle mode or from a sub-rate to a higher data rate; or
- prior to converting said second data to physical symbols and/or transmitting it.

3. The method according to claim 1, wherein said selected mode of operation comprises one of an low power idle mode of operation and a subset PHY mode of operation.

4. The method according to claim 1, comprising allocating said memory (216) to, and/or de-allocating said memory (216) from, buffering received and/or to-be-transmitted data, based on said selected mode of operation.

5. The method according to claim 1, comprising allocating said memory (216) to, and/or de-allocating said memory (216) from, buffering received and/or to-be-transmitted data, based on an amount of time required for said reconfiguration.

6. The method according to claim 1, comprising allocating memory (216) to, and/or de-allocating memory (216) from, buffering received and/or to-be-transmitted data, based on an amount of time required for reconfiguration of a link partner (102, 104) communicatively coupled to said PHY device (110, 202, 302, 336).

7. The method according to claim 1, comprising triggering said reconfiguration of said PHY device (110, 202, 302, 336) at a time determined by said control policy.

8. The method according to claim 2, comprising storing in said memory (216) or programming of information that includes parameters and/or code to effectuate operation of a multi-rate capable physical layer module (212).

9. The method according to claim 1, comprising controlling, from within said PHY device (110, 202, 302, 336), operation of other PHY devices integrated on a common substrate with said PHY device (110, 202, 302, 336).

10. A system for networking, the system comprising:
one or more circuits for use in a PHY device (110, 202, 302, 336), said one or more circuits being operable to execute one or more control policies that enable energy efficient networking by said PHY device (110, 202, 302, 336), said energy efficient networking comprising management of power consumption associated with communication of data via said PHY device (110, 202, 302, 336);
wherein the system is **characterised in that**:
said one or more circuits are operable to buffer first data received from an Ethernet network link (112) while higher layer functions and/or circuitry come out of an energy saving mode, said higher layer functions and/or circuitry representing a MAC controller and/or other OSI layer 2 and higher subsystems; and
said one or more circuits are operable to select a mode of operation for said PHY device (110, 202, 302, 336) based on said control policy; and
said one or more circuits are operable to reconfigure one or more components of said PHY device (110, 202, 302, 336) based on said selected mode of operation.

11. The system according to claim 10, wherein said one or more circuits comprise one or more memory elements (216a, 216b), and said one or more circuits are operable to allocate said one or more memory elements (216a, 216b) to, and/or de-allocate said one or more memory elements (216a, 216b) from, buffering received and/or to-be-transmitted data, based on said selected mode of operation.

12. The system according to claim 10, wherein said one or more circuits comprise one or more memory elements (216a, 216b), and said one or more circuits are operable to allocate said one or more memory elements (216a, 216b) to, and/or de-allocate said one or more memory elements (216a, 216b) from, buffering received and/or to-be-transmitted data, based on an amount of time required for said reconfiguration.

13. The system according to claim 10, wherein said one or more circuits comprise one or more memory elements (216a, 216b), and said one or more circuits are operable to allocate said one or more memory elements (216a; 216b) to, and/or
de-allocate said one or more memory elements (216a, 216b) from, buffering received and/or to-be-transmitted data, based on an amount of time required for reconfiguration of a link partner (102, 104) communicatively coupled to said PHY device (110, 202, 302, 336).

14. The system according to claim 10, wherein said one or more circuits comprise one or more memory elements (216a, 216b), and said one or more circuits are operable to trigger said reconfiguration of said PHY device(110, 202, 302, 336) at a time determined by said control policy.

## Patentansprüche

1. Verfahren zur Vernetzung, wobei das Verfahren umfasst:
Steuern, aus einer PHY-Vorrichtung (110, 202, 302, 336) heraus, des Betriebs der PHY-Vorrichtung (110, 202, 302, 336) basierend auf einer oder mehreren Steuerungsrichtlinien, die aus der PHY-Vorrichtung (110, 202, 302, 336) heraus ausgeführt werden, wobei die eine oder die mehreren Steuerungsrichtlinien energieeffiziente Vernetzung durch die PHY-Vorrichtung (110, 202, 302, 336) ermöglichen, wobei die energieeffiziente Vernetzung die Verwaltung von Stromverbrauch umfasst, der mit der Kommunikation von Daten über die PHY-Vorrichtung (110, 202, 302, 336) verbunden ist;
wobei das Verfahren **dadurch gekennzeichnet ist, dass** es des Weiteren umfasst:
Zwischenspeichern erster Daten, die von einer Ethernet-Netzwerkverbindung (112) empfangen werden, während Funktionen und/oder Schaltung höherer Schichten aus einem Energiesparmodus herauskommen, wobei die Funktionen und/oder Schaltung höherer Schichten einen MAC-Controller und/oder andere OSI Schicht 2 und höhere Untersysteme repräsentieren;
Auswählen eines Betriebsmodus für die PHY-Vorrichtung (110, 202, 302, 336) basierend auf der Steuerungsrichtlinie; und Neukonfigurieren einer oder mehrerer Komponenten der PHY-Vorrichtung (110, 202, 302, 336) basierend auf dem ausgewählten Betriebsmodus.

2. Verfahren nach Anspruch 1, wobei das Verfahren des Weiteren umfasst:
Zwischenspeichern zweiter Daten, die über eine Schnittstelle (114) von den Funktionen und/oder der Schaltung höherer Schichten empfangen werden, in einem Speicher (216):
- während die PHY-Vorrichtung (110, 202, 302, 336) aus einem Niedrigenergie-Leerlaufmodus herausgeht oder von einer Subrate in eine höhere Datenrate übergeht; oder
- vor dem Konvertieren der zweiten Daten in physikalische Symbole und/oder dem Senden davon.

3. Verfahren nach Anspruch 1, wobei der ausgewählte Betriebsmodus einen eines Niedrigenergie-Leerlaufbetriebsmodus und eines Subset-PHY-Betriebsmodus aufweist.

4. Verfahren nach Anspruch 1, das das Zuteilen des Speichers (216) zum und/oder das Freisetzen des Speichers (216) vom Zwischenspeichern empfangener und/oder zu sendender Daten umfasst, basierend auf dem ausgewählten Betriebsmodus.

5. Verfahren nach Anspruch 1, das das Zuteilen des Speichers (216) zum und/oder das Freisetzen des Speichers (216) vom Zwischenspeichern empfangener und/oder zu sendender Daten umfasst, basierend auf der für die Rekonfigurierung benötigten Zeit.

6. Verfahren nach Anspruch 1, das das Zuteilen des Speichers (216) zum und/oder das Freisetzen des Speichers (216) vom Zwischenspeichern empfangener und/oder zu sendender Daten umfasst, basierend auf der Zeit, die für die Rekonfigurierung eines Verbindungspartners (102, 104) benötigt wird, der kommunikativ mit der PHY-Vorrichtung (110, 202, 302, 336) verbunden ist.

7. Verfahren nach Anspruch 1, das das Auslösen der Rekonfigurierung der PHY-Vorrichtung (110, 202, 302, 336) zu einem von der Steuerungsrichtlinie festgesetzten Zeitpunkt umfasst.

8. Verfahren nach Anspruch 2, das das Speichern in dem Speicher (216) oder das Programmieren von Informationen umfasst, die Parameter und/oder Code enthalten, um den Betrieb eines mehrratenfähigen Bitübertragungsschichtmoduls (212) zu bewirken.

9. Verfahren nach Anspruch 1, das das Steuern, aus der PHY-Vorrichtung (110, 202, 302, 336) heraus, des Betriebs anderer PHY-Vorrichtungen umfasst, die mit der PHY-Vorrichtung (110, 202, 302, 336) auf einem gemeinsamen Substrat integriert sind.

10. System zur Vernetzung, wobei das System aufweist:
eine oder mehrere Schaltungen zur Verwendung in einer PHY-Vorrichtung (110, 202, 302, 336), wobei die eine oder die mehreren Schaltungen dazu betreibbar sind, eine oder mehrere Steuerungsrichtlinien auszuführen, die energieeffiziente Vernetzung durch die PHY-Vorrichtung (110, 202, 302, 336) ermöglichen, wobei die energieeffiziente Vernetzung die Verwaltung von Stromverbrauch umfasst, der mit der Kommunikation von Daten über die PHY-Vorrichtung (110, 202, 302, 336) verbunden ist;
wobei das System **dadurch gekennzeichnet ist, dass**:
die eine oder die mehreren Schaltungen dazu betreibbar sind, erste Daten zwischenzuspeichern, die von einer Ethernet-Netzwerkverbindung (112) empfangen werden, während Funktionen und/oder Schaltung höherer Schichten aus einem Energiesparmodus herauskommen, wobei die Funktionen und/oder Schaltung höherer Schichten einen MAC-Controller und/oder andere OSI Schicht 2 und höhere Untersysteme repräsentieren; und
die eine oder die mehreren Schaltungen dazu betreibbar sind, einen Betriebsmodus für die PHY-Vorrichtung (110, 202, 302, 336) basierend auf der Steuerungsrichtlinie auszuwählen; und
die eine oder die mehreren Schaltungen dazu betreibbar sind, eine oder mehrere Komponenten der PHY-Vorrichtung (110, 202, 302, 336) basierend auf dem ausgewählten Betriebsmodus neu zu konfigurieren.

11. System nach Anspruch 10, wobei die eine oder die mehreren Schaltungen ein oder mehrere Speicherelemente (216a, 216b) aufweisen, und die eine oder die mehreren Schaltungen dazu betreibbar sind, das eine oder die mehreren Speicherelemente (216a, 216b) dazu zuzuteilen und/oder das eine oder die mehreren Speicherelemente (216a, 216b) davon freizusetzen, empfangene und/oder zu sendende Daten zwischenzuspeichern, basierend auf dem ausgewählten Betriebsmodus.

12. System nach Anspruch 10, wobei die eine oder die mehreren Schaltungen ein oder mehrere Speicherelemente (216a, 216b) aufweisen, und die eine oder die mehreren Schaltungen dazu betreibbar sind, das eine oder die mehreren Speicherelemente (216a, 216b) dazu zuzuteilen und/oder das eine oder die mehreren Speicherelemente (216a, 216b) davon freizusetzen, empfangene und/oder zu sendende Daten zwischenzuspeichern, basierend auf der für die Rekonfigurierung benötigten Zeit.

13. System nach Anspruch 10, wobei die eine oder die mehreren Schaltungen ein oder mehrere Speicherelemente (216a, 216b) aufweisen, und die eine oder die mehreren Schaltungen dazu betreibbar sind, das eine oder die mehreren Speicherelemente (216a, 216b) dazu zuzuteilen und/oder das eine oder die mehreren Speicherelemente (216a, 216b) davon freizusetzen, empfangene und/oder zu sendende Daten zwischenzuspeichern, basierend auf der Zeit, die für die Rekonfigurierung eines Verbindungspartners (102, 104) benötigt wird, der kommunikativ mit der PHY-Vorrichtung (110, 202, 302, 336) verbunden ist.

14. System nach Anspruch 10, wobei die eine oder die mehreren Schaltungen ein oder mehrere Speicherelemente (216a, 216b) aufweisen, und wobei die eine oder die mehreren Schaltungen dazu betreibbar sind, die Rekonfigurierung der PHY-Vorrichtung (110, 202, 302, 336) zu einem von der Steuerungsrichtlinie festgesetzten Zeitpunkt auszulösen.

## Revendications

1. Procédé pour une mise en réseau, le procédé comprenant :
le contrôle, de l'intérieur d'un dispositif PHY (110, 202, 302, 336), d'une opération dudit dispositif PHY (110, 202, 302, 336) sur la base d'une ou plusieurs politique(s) de contrôle exécutée(s) de l'intérieur dudit dispositif PHY (110, 202, 302, 336), dans lequel ladite une ou lesdites plusieurs politique(s) de contrôle permet/permettent une mise en réseau écoénergétique par ledit dispositif PHY (110, 202, 302, 336), ladite mise en réseau écoénergétique comprenant la gestion d'une consommation d'énergie associée avec une communication de données par l'intermédiaire dudit dispositif PHY (110, 202, 302, 336) ;
dans lequel le procédé est **caractérisé en ce qu'**il comprend en outre :
la mise en tampon de premières données reçues d'une liaison réseau Ethernet (112) tandis que des fonctions et/ou un ensemble de circuits de couche supérieure sortent d'un mode d'économie d'énergie, lesdites fonctions et/ou ledit ensemble de circuits de couche supérieure représentant un contrôleur MAC et/ou autres sous-systèmes OSI de couche 2 et supérieure,
la sélection d'un mode d'opération pour ledit dispositif PHY (110, 202, 302, 336) sur la base de ladite politique de contrôle ; et
la reconfiguration d'un ou plusieurs composant(s) dudit dispositif PHY (110, 202, 302, 336) sur la base dudit mode d'opération sélectionné.

2. Procédé selon la revendication 1, dans lequel le procédé comprend en outre : la mise en tampon de deuxièmes données reçues par l'intermédiaire d'une interface (114) desdites fonctions et/ou dudit ensemble de circuits de couche supérieure dans une mémoire (216) :
- tandis que ledit dispositif PHY (110, 202, 302, 336) sort d'un mode de repos à faible consommation ou passe d'un sous-débit à un débit de données plus élevé ; ou
- avant la conversion desdites deuxièmes données en symboles physiques et/ou la transmission de celles-ci.

3. Procédé selon la revendication 1, dans lequel ledit mode d'opération sélectionné comprend un parmi un mode d'opération au repos à faible consommation et un mode d'opération de PHY de sous-ensemble.

4. Procédé selon la revendication 1, comprenant l'attribution de ladite mémoire (216) et/ou la désattribution de ladite mémoire (216) à la mise en tampon de données reçues et/ou devant être transmises sur la base dudit mode d'opération sélectionné.

5. Procédé selon la revendication 1, comprenant l'attribution de ladite mémoire (216) et/ou la désattribution de ladite mémoire (216) à la mise en tampon de données reçues et/ou devant être transmises sur la base d'une quantité de temps nécessaire pour ladite reconfiguration.

6. Procédé selon la revendication 1, comprenant l'attribution de mémoire (216) et/ou la désattribution de mémoire (216) à la mise en tampon de données reçues et/ou devant être transmises sur la base d'une quantité de temps nécessaire pour une reconfiguration d'un partenaire de liaison (102, 104) couplé en communication audit dispositif PHY (110, 202, 302, 336).

7. Procédé selon la revendication 1, comprenant le déclenchement de ladite reconfiguration dudit dispositif PHY (110, 202, 302, 336) à un moment déterminé par ladite politique de contrôle.

8. Procédé selon la revendication 2, comprenant le stockage dans ladite mémoire (216) ou la programmation d'informations qui incluent des paramètres et/ou un code pour effectuer une opération d'un module de couche physique (212) apte à des débits multiples.

9. Procédé selon la revendication 1, comprenant le contrôle, de l'intérieur dudit dispositif PHY (110, 202, 302, 336), d'une opération d'autres dispositifs PHY intégrés sur un substrat commun avec ledit dispositif PHY (110, 202, 302, 336).

10. Système pour une mise en réseau, le système comprenant :
un ou plusieurs circuit(s) destiné(s) à une utilisation dans un dispositif PHY (110, 202, 302, 336), ledit un ou lesdits plusieurs circuit(s) étant utilisable(s) pour exécuter une ou plusieurs politique(s) de contrôle qui permet/permettent une mise en réseau écoénergétique par ledit dispositif PHY (110, 202, 302, 336), ladite mise en réseau écoénergétique comprenant la gestion d'une consommation d'énergie associée avec une communication de données par l'intermédiaire dudit dispositif PHY (110, 202, 302, 336) ;
dans lequel le système est **caractérisé en ce que** :
ledit un ou lesdits plusieurs circuit(s) est/sont utilisable(s) pour mettre en tampon des premières données reçues d'une liaison réseau Ethernet (112) tandis que des fonctions et/ou un ensemble de circuits de couche supérieure sortent d'un mode d'économie d'énergie, lesdites fonctions et/ou ledit ensemble de circuits de couche supérieure représentant un contrôleur MAC et/ou autres sous-systèmes OSI de couche 2 et supérieure ; et
ledit un ou lesdits plusieurs circuit(s) est/sont utilisable(s) pour sélectionner un mode d'opération pour ledit dispositif PHY (110, 202, 302, 336) sur la base de ladite politique de contrôle ; et
ledit un ou lesdits plusieurs circuit(s) est/sont utilisable(s) pour reconfigurer un ou plusieurs composant(s) dudit dispositif PHY (110, 202, 302, 336) sur la base dudit mode d'opération sélectionné.

11. Système selon la revendication 10, dans lequel ledit un ou lesdits plusieurs circuit(s) comprend/comprennent un ou plusieurs élément(s) de mémoire (216a, 216b), et ledit un ou lesdits plusieurs circuit(s) est/sont utilisable(s) pour attribuer ledit un ou lesdits plusieurs élément(s) de mémoire (216a, 216b) et/ou désattribuer ledit un ou lesdits plusieurs élément(s) de mémoire (216a, 216b) à la mise en tampon de données reçues et/ou devant être transmises, sur la base dudit mode d'opération sélectionné.

12. Système selon la revendication 10, dans lequel ledit un ou lesdits plusieurs circuit(s) comprend/comprennent un ou plusieurs élément(s) de mémoire (216a, 216b), et ledit un ou lesdits plusieurs circuit(s) est/sont utilisable(s) pour attribuer ledit un ou lesdits plusieurs élément(s) de mémoire (216a, 216b) et/ou désattribuer ledit un ou lesdits plusieurs élément(s) de mémoire (216a, 216b) à la mise en tampon de données reçues et/ou devant être transmises, sur la base d'une quantité de temps nécessaire pour ladite reconfiguration.

13. Système selon la revendication 10, dans lequel ledit un ou lesdits plusieurs circuit(s) comprend/comprennent un ou plusieurs élément(s) de mémoire (216a, 216b), et ledit un ou lesdits plusieurs circuit(s) est/sont utilisable(s) pour attribuer ledit un ou lesdits plusieurs élément(s) de mémoire (216a, 216b) et/ou désattribuer ledit un ou lesdits plusieurs élément(s) de mémoire (216a, 216b) à la mise en tampon de données reçues et/ou devant être transmises, sur la base d'une quantité de temps nécessaire pour une reconfiguration d'un partenaire de liaison (102, 104) couplé en communication audit dispositif PHY (110, 202, 302, 336).

14. Système selon la revendication 10, dans lequel ledit un ou lesdits plusieurs circuit(s) comprend/comprennent un ou plusieurs élément(s) de mémoire (216a, 216b), et ledit un ou lesdits plusieurs circuit(s) est/sont utilisable(s) pour déclencher ladite reconfiguration dudit dispositif PHY (110, 202, 302, 336) à un moment déterminé par ladite politique de contrôle.
